(19) Europäisches Patentamt

European Patent Office

Office européen des brevets

(11) **EP 4 760 571 A1**

(12) **EUROPEAN PATENT APPLICATION**

(43) Date of publication:
**17.06.2026 Bulletin 2026/25**

(21) Application number: **24383347.2**

(22) Date of filing: **10.12.2024**

(51) International Patent Classification (IPC):
**G06F 21/60** (2013.01) **H04L 9/32** (2006.01)
**H04L 9/00** (2022.01) **H04L 9/40** (2022.01)

(52) Cooperative Patent Classification (CPC):
**H04L 63/0435; G06F 21/606; H04L 9/0643;
H04L 9/3236; H04L 9/50; H04L 63/0478;
H04L 63/0485; H04L 63/062; H04L 63/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Telefónica Innovación Digital, S.L.U.
28050 Madrid (ES)**

(72) Inventor: **YANG, Xiaoyuan
28050 MADRID (ES)**

(74) Representative: **Herrero & Asociados, S.L.
Edificio Aqua - Calle Agustín de Foxá, 4-10, 2ºA
28036 Madrid (ES)**

(54) **HISTORICAL DATA BASED ENCRYPTION SYSTEM AND METHOD**

(57) A system and method for historical data-based encryption mitigate store-now-decrypt-later (SNDL) attacks by leveraging quantum-resistant hash functions and shared historical data. The system includes encryption and decryption servers (120,230), each maintaining hash pools (126,236) for secure communication. Randomly selected historical hashes generate encryption keys for securing messages, increasing the data an attacker must intercept. Synthetic traffic spikes further elevate attack costs. The method ensures post-quantum resilience through secure session key exchanges, enhancing scalability and adaptability to diverse communication environments.

FIG. 4

EP 4 760 571 A1

## Description

## TECHNICAL FIELD

The present invention relates generally to cybersecurity, specifically in the context of encryption systems that are resilient to threats emerging from the advancement of quantum computing. More particularly, the present invention relates to a system and methods for encryption that mitigate the risks associated with store-now-decrypt-later (SNDL) attacks by leveraging shared historical data to enhance the cost of said attack.

## BACKGROUND

The accelerated evolution of quantum computing has introduced both ground breaking opportunities and significant threats to existing cybersecurity infrastructures. One of the most significant concerns arises from Shor's algorithm, which enables quantum computers to efficiently factorize large numbers in two prime numbers. This presents a direct threat to classical cryptographic systems like RSA and ECC, which are based on the computational difficulty of prime factorization.

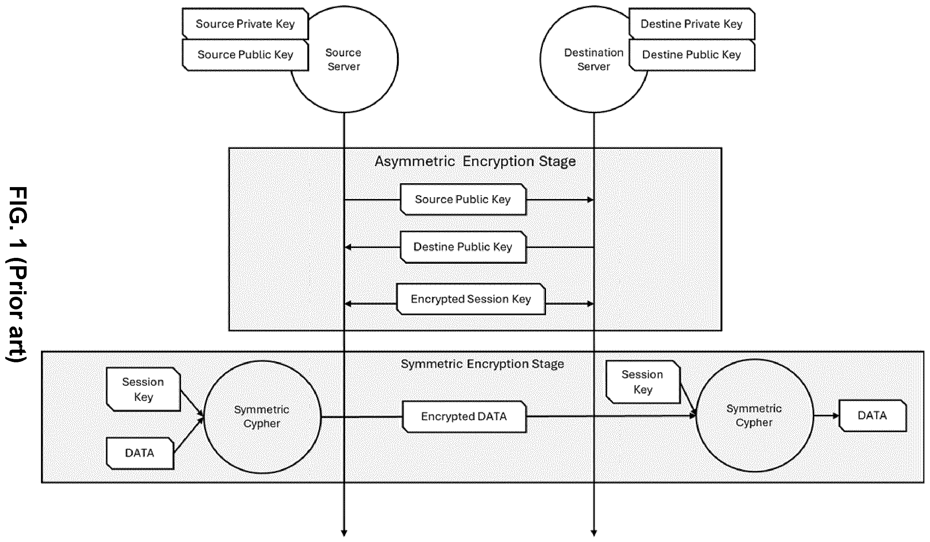

Figure 1 depicts a typical communication protocol between two servers. In this scenario, the source server is attempting to transmit data to the destination server. Each server is equipped with a pair of private and public keys. The protocol is comprised of two distinct steps.

-    In the context of asymmetric encryption, the public keys are exchanged between the source server and the destination server. Subsequently, the public and private keys are employed to establish a session key between the servers.

-    In the symmetric encryption phase, the session key is employed to encrypt the data using a symmetric cipher. Subsequently, the encrypted data is transmitted to the destination server, which employs the identical session key to decrypt the data with the same symmetric cipher.

Quantum threats primarily target asymmetric encryption schemes, whereas symmetric encryption methods, such as Advanced Encryption Standard (AES) are considered to be quantum-safe. Other symmetric encryption methods, such as US10887080B2, which rely on consecutively applied hash functions, are also available. Other proposals, such as CN118590234A, suggest the use of quantum-generated random numbers as a more reliable key for symmetric encryption schemes. While these methods can enhance the resilience of symmetric encryption, they do not address the quantum threat, as quantum computers primarily affect asymmetric encryption schemes.

Document CN118590234A discloses a secret communication method based on quantum random numbers, which relates to the field of quantum secret communication and comprises the following steps: acquiring a historical quantum random number and a historical hash value, and generating a new quantum random number after the hash communication verification is successful; performing pixel replacement processing on the plaintext information to obtain target plaintext information; and according to the new quantum random number and the historical quantum random number, performing encryption splicing processing on the target plaintext information through an AES encryption algorithm, and sending the target plaintext information to a target receiving end. The technical scheme provided by the invention avoids the integrity verification of the encrypted data by the traditional communication method by using a mode of combining the quantum random number and the hash communication verification, not only reduces the data processing amount, but also realizes real one-time encryption and enhances the security of secret communication.

Document US10887080B2 discloses a method and computer-readable storage medium for a computer system to perform an encryption scheme is disclosed that is capable of encrypting big data that includes complex data, including image data, sensor data, and text data, and supporting both symmetric and asymmetric-key handling. The encryption scheme uses double hashing using two different consecutively-applied hash functions. With double hashing, the encryption scheme eliminates the threat of known cryptanalysis attacks and provides a highly secure ciphering scheme. Also, the ciphertext header generated in the encryption scheme enables efficient cloud data sharing. A user can share the encrypted data later by re-encrypting the seed and sharing a new ciphertext header without the need of re-encrypting the data or changing the secret or private key. Thus, the encrypted data stays as is in the cloud, and only the seed is encrypted and shared as needed.

To address the above stated vulnerability, post-quantum cryptography (PQC) has been proposed. These algorithms are designed to replace current asymmetric encryption schemes (such as RSA or ECC) and are resistant to attacks from both classical and quantum computers. PQC methods often use mathematical problems, such as lattice-based, hash-based, and code-based constructions, which are believed to be intractable even for quantum computers.

However, the novelty of these algorithms introduces its own set of challenges. Issues in their implementation, theoretical vulnerabilities, or unforeseen flaws in their design could compromise their effectiveness.

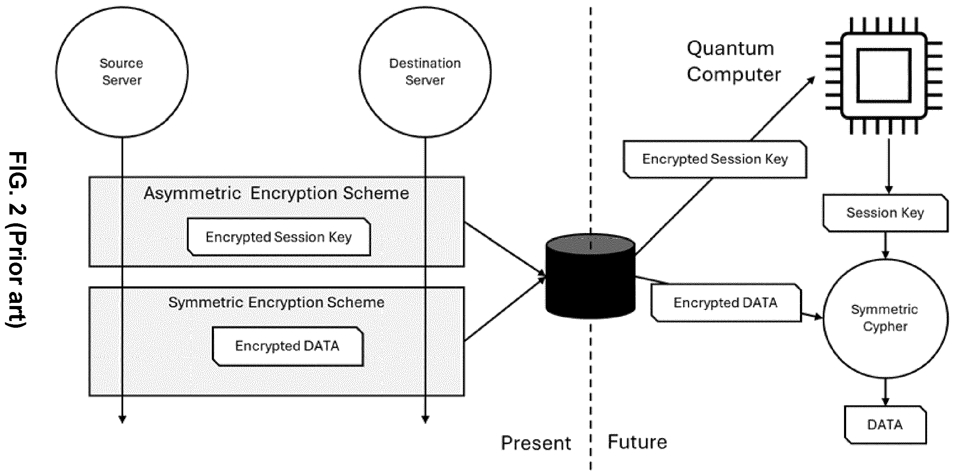

This presents a significant challenge for "store now and decrypt later" (SNDL) attacks (Figure 2), in which adversaries intercept and store encrypted data with the expectation that future quantum computers will be able to break the encryption. A future quantum computer could be used to extract the session key from the intercepted traffic. In possession of the session key, the attacker can then readily reverse the symmetric encryption and decrypt the information, thereby obtaining the original message.

The deployment of post-quantum solutions may still leave sensitive data vulnerable to eventual decryption, should any errors occur. It is therefore imperative that the transition to post-quantum security be conducted with haste, subjected to rigorous testing, and focused on robust implementation in order to mitigate the risk of SNDL attacks.

The "store now and decrypt later" approach inevitably entails a cost (time and resources). A malicious actor must meticulously identify the target data and store it for an extended period. This proposal describes a system that would increase the cost of performing such an attack by requiring the hacker to store a greater amount of information for a longer period of time in order to successfully decrypt the data using a future quantum computer. By increasing the cost, the risk of suffering a SNDL attack can be effectively mitigated.

## SUMMARY

The problems found in prior art techniques are generally solved or circumvented, and technical advantages are generally achieved, by the disclosed embodiments which provide a historical data-based encryption system and method designed to protect against store-now-decrypt-later (SNDL) attacks.

As has been previously disclosed, the development of quantum computing, especially with Shor's algorithm, poses a significant threat to traditional asymmetric encryption systems, such as RSA and ECC, which rely on the computational difficulty of prime number factorization. While symmetric encryption methods, such as AES, are regarded as quantum-secure, they do not entirely mitigate the risk of SNDL attacks, whereby intercepted encrypted data can be subsequently decrypted using quantum computers. Post-quantum cryptography (PQC) seeks to address these vulnerabilities through the use of algorithms based on mathematical problems that are deemed intractable even for quantum computers. However, the implementation of these systems can be susceptible to errors, which may result in the exposure of sensitive data. This technical issue is addressed by the system and method disclosed in the appended claims.

The claimed invention proposes an encryption system based on the utilization of historical data shared between servers. This increases the cost of performing an SNDL attack by requiring the attacker to store a substantial amount of historical data for subsequent decryption. The system comprises, at a minimum, the following components:

- An Encryption Server, which is responsible for generating the encrypted message (Sk) from the original message (Mk) and historical hashes.

- A Decryption Server is also included, which is responsible for recovering the original message (Mk) using the same historical hashes as the Encryption Server.

The encryption and decryption servers may implement traffic spikes based on historical data to introduce synthetic additional traffic and increase, therefore, the difficulty of SNDL attacks within an untrust environment.

The fundamental premise of the invention is based on the exchange of messages that generate hashes, which are then stored in hash pools on both servers. Each new message is encrypted using a random combination of previous hashes, thereby increasing the amount of information needed for successful decryption by an attacker.

The following advantages are achieved: (a) the claimed invention significantly increases the cost (at least in terms of resources, time and money) associated with SNDL attacks, as it requires the storage of a large volume of historical data; (b) the claimed invention introduces an additional layer of security by relying on historical data, even in the face of post-quantum cryptography failures; and (c) the system is scalable and adaptable to different communication environments.

Throughout the description and claims the word "comprises" and its variants are not intended to exclude other technical characteristics, additives, components, or steps. For those skilled in the art, other objects, advantages, and features of the invention will emerge partly from the description and partly from the practice of the invention. The following examples and drawings are provided by way of illustration and are not intended to restrict the present invention.

Furthermore, the present invention covers all possible combinations of particular and preferred embodiments indicated herein.

## BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1: Illustrates a typical prior art communication protocol between two servers. It illustrates the asymmetric and symmetric encryption stages, and how these are vulnerable to SNDL attacks.

Figure 2: Illustrates the concept of the SNDL attack, where an attacker intercepts and stores encrypted data in the hope that a future quantum computer will be able to decrypt it.

Figure 3: Shows the general architecture of the proposed system according to an embodiment of the present disclosure, highlighting the message flow between the Encryption Server, Decryption Server and trusted environments.

Figure 4: Shows the design of the encryption and decryption system according to an embodiment of the present disclosure. It includes key components such as the Hash Generator, the Hash Pool and the Historical Hash-based Encryptor.

Figure 5: Illustrates in detail the design of the historical hash-based cipher according to an embodiment of the present disclosure, where selected hashes are concatenated and processed to generate an encryption key.

Figure 6: Illustrates the use of synthetic traffic spikes to hinder SNDL attacks by increasing the volume of data an attacker needs to intercept, according to an embodiment of the present disclosure.

Figure 7: Illustrates the hash update strategy according to an embodiment of the present disclosure, where hashes are concatenated to incorporate historical dependencies, making it even more difficult for an attacker.

**DETAILED DESCRIPTION OF EMBODIMENTS**

As it is previously discussed, the main problem facing the present invention is how to protect sensitive information against SNDL attacks (400), even in a scenario where quantum computers are available. This problem is compounded by the following factors: (a) the security of classical encryption is at risk due to the ability of quantum computers to decrypt asymmetric keys; (b) although symmetric encryption such as AES is quantum-resistant, the exchange of keys to establish the session remains a weak point.

Post-quantum solutions, while necessary, do not completely eliminate the risk due to possible implementation errors or future theoretical vulnerabilities. The SNDL attack (400) not only compromises current encrypted information, but exploits the fact that data intercepted in the present can be decrypted in the future, creating a temporary vulnerability gap. In this context, the present invention introduces a novel and complementary approach that increases the cost for attackers by requiring the preservation of a significant volume of historical data, effectively deterring SNDL attacks (400).

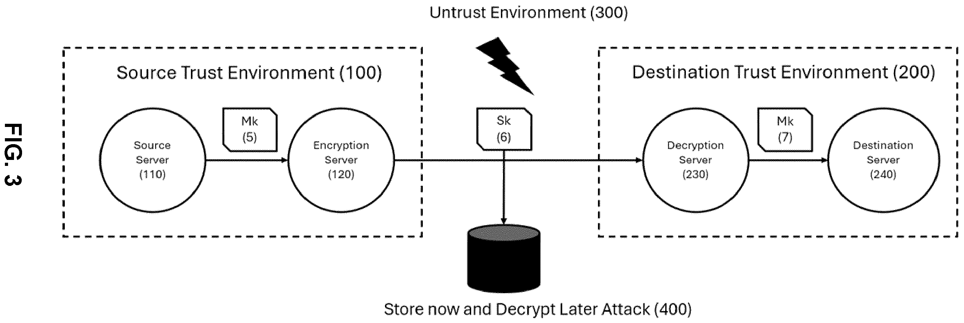

According to an embodiment, it is presented a system for encrypting data based on shared historical data between a source server (110) and a destination server (240). In particular, the source server (110) and the encryption server (120) are components of a communication system (Figure 3) in a source trust environment (100), wherein the source server (110) intends to transmit a message Mk (5) to the destination server (240). Initially, the source server (110) transmits the message Mk (5) to the encryption server (120), which then encrypts the data to generate the encrypted message Sk (6). The encrypted message (6), Sk is transmitted from the source server (110) to a decryption server (230) via an untrusted network or environment (300), such as the public Internet. The decryption server (230) then decrypts the encrypted message Sk (6) and recovers the original message Mk (7), that is subsequently transmitted to the destination server (240). It is important to note that the source server (110) and the encryption server (120) are situated within a trusted source environment (100), whereas the decryption server (230) and the destination server (240) are located within a destination trusted environment (200) different to the source trust environment (100).

A "store now and decrypt later" (SNDL) attack (400) can only be performed in an untrusted environment (300) that connects two trust environments (100,200). During the attack, the attacker stores the encrypted message Sk (6) in a hard disk or in any other forms of storage, such as a cloud-based storage, and then waits for a sufficient amount of time to allow for decryption of the encrypted message Sk (6) using a future quantum computer, thereby obtaining the message Mk (5,7).

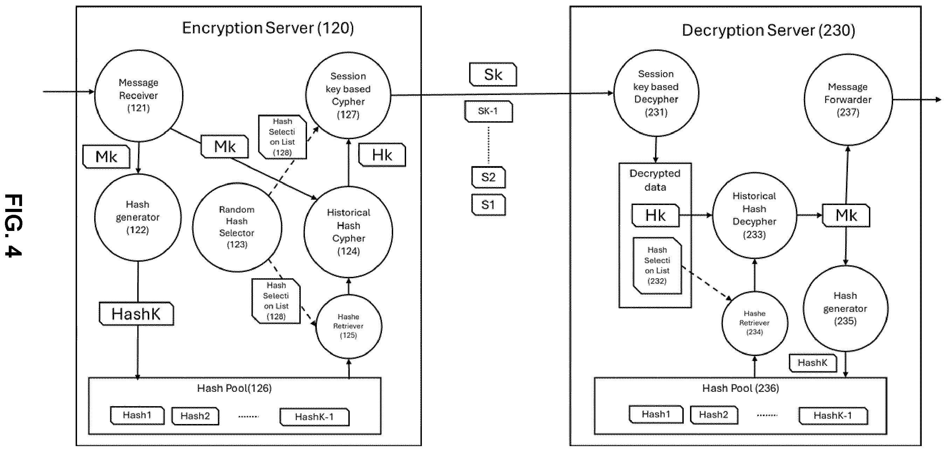

Figure 4 depicts the design of the proposed encryption server (120) and decryption server (230) of figure 3, according to an embodiment. Both the encryption server (120) and decryption server (230) comprise a component designated as the hash pool (126, 236) which serves to store hashes generated by the hash generator (122, 235). The hash generator (122, 235) has the potential to utilize any quantum-resistant hash function, including for example SHA-256. The inputs to the hash generators (122, 235) are the messages Mk (5, 7). In the case of the encryption server (120), the input is the source message Mk (5) that is to be sent. In the case of the decryption server (230), the input to the hash generator (235) is the decrypted message Mk (7).

Note that the source message Mk (5) and the decrypted message Mk (7) is assumed to be the same.

In order to describe the claimed system, it should be assumed that the encryption and decryption servers (120, 230) have already exchanged K-1 messages and that the encryption server (120) wishes to send the message Mk (5) to the decryption server (230). In this scenario, the hash pool (126, 236) in both encryption and decryption servers (120, 230) has already been populated with the hashes of the K-1 previous messages. The encryption and decryption servers (120, 230) are initially empty, with no hashes stored. As messages are exchanged, the encryption and decryption servers (120, 230) generate hashes.

The following actions are executed in the encryption and decryption servers (120, 230), according to an embodiment (this is a non-limitative example, and other embodiments may not include all the steps and/or include different steps). First, the message Mk (5) is received by message receiver (121) from the source server (110) and needs to be forwarded to the destination server (240) through the decryption server (230). Afterwards, the following method may be executed:

(1) The random hash selector (123) generates a list of n random integers $[i_1, i_2, ... i_n]$, being all $i_i <= K-1$, to form the hash selection list (128).
(1.1) The hash selection list (128) is basically a list of previous hashes that will be used to cipher the message Mk (5) to be sent.

(2) The hash retriever (125) will retrieve all selected hashes from the hash pool (126) and pass them to the historical hash cypher (124)

(3) Historical hash cypher (124) cyphers the message Mk (5) using list of hashes selected by the random hash selector (123), that are previously retrieved by the hash retriever (125) from the hash pool (126).

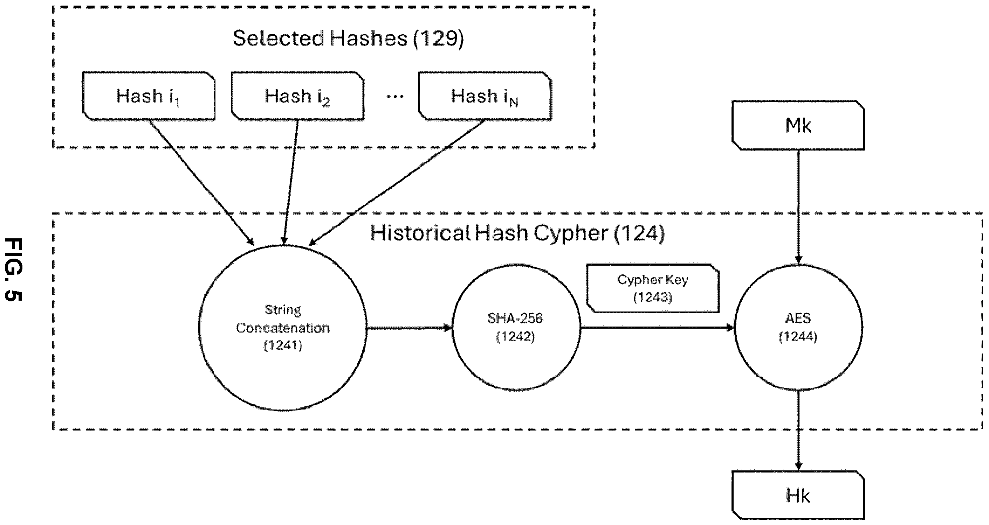

(3.1) The internal design of the historical hash cypher (124) is represented in figure 5, according to an embodiment. All selected hashes (129) are concatenated by the string concatenation (1241) and hashed, by SHA-256 (1242) in this embodiment, to create the session key (1243).

(3.2) The session key (1243) is then used, by AES (1244) in this embodiment, to encrypt the message Mk (5) to generate a hashed message Hk. Even though AES (1244) is considered quantum resistant, any other quantum resistant algorithm could be used.

(4) The list of random integers from the random hash selector (123) and hashed message Hk may be inputs for session key based cypher (127) that cyphers all inputs using AES (or any other quantum resistant algorithm) with a previous exchanged session key between the encryption server (120) and the decryption server (230). The session key exchange protocol could be the new post-quantum algorithm crystal-kyber (*kyber* is a key encapsulation mechanism, KEM, designed to be resistant to cryptanalytic attacks) or any other. The output of the session key based cypher (127) is the encrypted message Sk (6) and is finally transmitted to the decryption server (230).

The decryption server (230) receives the encrypted message Sk (6) and performs the following steps to obtain an initial decrypted message Mk (7), according to an embodiment.

(1) The session key based decypher (231) decrypts the encrypted message Sk (6) using the exchange session key. The output will be the list of n random integers $[i_1, i_2, ... i_n]$ and the hashed message Hk.

(2) The hash retriever (234) retrieves all selected hashes (232) from hash pool (236) and passes them to the historical hash decypher (233).

(3) The internal design of the historical hash based decypher (233) may be identical to historical hash based cypher (124) represented in figure 5, and it takes the list of hashes as key and decrypts the hashed message Hk to obtain the decrypted message Mk (7).

(4) The decrypted message Mk (7) is then forwarded by message forwarder (237) to the destination server (240).

The efficacy of the proposed design hinges on the assumption that an adversary must possess a comprehensive historical record of encrypted communications between two encryption and decryption servers (120, 230) to successfully decrypt the data using a future quantum computer. In particular, the adversary must store the K-1 preceding messages in order to decrypt the Mk. Given the size of each message, SM, the total data that the adversary must store is as follows:

$$\text{Store Data} = \text{SM} \times \text{K}$$

The quantity of data to be stored is thus given by the product of the size of each message (SM) and the number of previous messages (K). For example, if SM is 1 megabyte and K is 4.6 million, the required data storage is 44 terabytes. It would take approximately 100 hours to transfer the 46 million messages from the encryption server (120) to the decryption server (230) via a network link with a bandwidth of 1 Gbps. If the attacker were to store the data in Amazon S3 for 15 years, the economic cost would be approximately $150,000.

It is also necessary to consider the time required for the attacker to intercept communication from the encryption and decryption servers (120, 230). Given that each hash may be 32 bytes, a hash pool of 1 GB could potentially accommodate 33 million hashes. If it is assumed that each message is 1 MB in size and that the transfer rate is 1 Gbps, then a 1 GB pool of hashes could be stored for approximately 72 hours. This indicates that the attacker must successfully intercept 72 hours of communication in order to decrypt the message at a later date. To extend the range of historical data that the hash pool can accommodate, the following strategies may be incorporated into the design:

In the encryption server (120), a flag is included in the encrypted message Sk (6) to indicate whether the message should be used to update the hash pool (126,236). If only 50% of the messages are selected, the hash pool could cover 144 hours. It is important to note that the adversary is unable to strategically discard messages that are not utilized for hash pool updates. This is because the adversary requires the future quantum computer to perform the decryption, which will only occur once the adversary has identified that the message has been excluded from the Hash Pool.

The encryption server (120) and decryption server (230) implement policies for updating the hash chain. The hash generator (122, 235) combines the new message with previously generated hashes to create a new hash value. In this manner, the effect of past hashes is still observed, even in instances where a hash has been discarded from the hash pool due to size limitations.

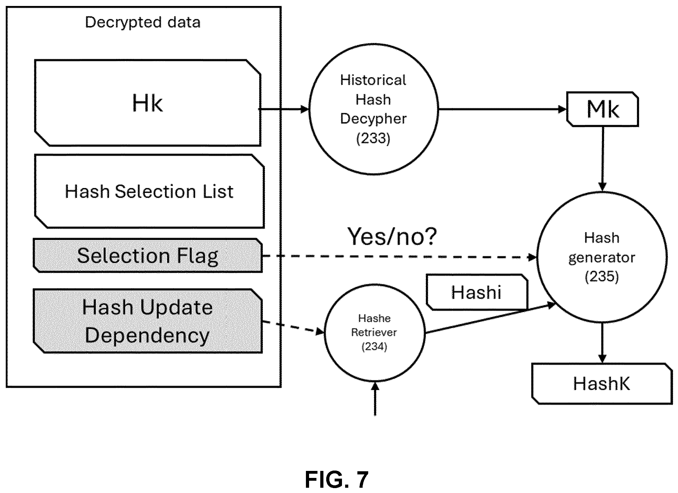

Figure 7 illustrates the design of a portion of the decryption server (230). The output of the session key-based decryption process may contain two elements: a selection flag, which is a Boolean value, and a hash update dependency, which is an integer. The hash retriever (234) will then proceed to load the indicated hash ($hash_i$) from the hash pool (236). Subsequently, the $hash_i$ will be employed by the hash generator (235), in conjunction with the decrypted message Mk (7), to construct the $Hash_K$.

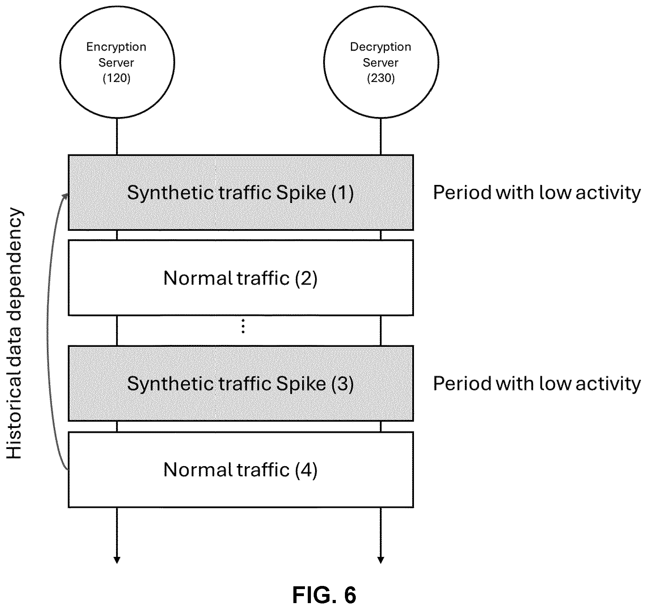

It is possible to design random synthetic traffic spikes between the encryption server (120) and the decryption server (230), thereby increasing the cost to the attacker of performing a network interception. Figure 6 illustrates the two periods of synthetic traffic spikes and the two periods of normal traffic. The second period of normal traffic (4) is encrypted using hashes derived from messages exchanged during the initial synthetic traffic spike (1). Consequently, in order for the attacker to successfully decipher the information using the future quantum computer, it is necessary for them to intercept both the synthetic traffic spike (1) and the normal traffic (4).

It is crucial to note that the aforementioned flowchart and block diagram illustrate the architectural design, functional capabilities, and operational principles of potential implementations of computer systems, methods, and devices, as exemplified by various embodiments of the present invention. In this regard, each block of the flowchart or block diagram may represent a module, segment, or portion of instructions, which includes one or more executable instructions for implementing the specified logical function(s). In some alternative implementations, the functions indicated in the block diagram may occur in a sequence that differs from the one depicted in the figures. For example, two blocks shown in succession may, in fact, execute substantially concurrently, or the blocks may, on occasion, execute in the reverse order, depending on the functionality involved. It should be noted that each block of the block diagrams and/or flowchart illustration, and combinations of the blocks of the block diagrams and/or flowchart illustration, may be implemented by specific-purpose hardware-based systems that perform the specified functions or acts or carry out combinations of specific-purpose hardware and computer instructions.

In particular, the present invention may be implemented as a programmatically executable process. Moreover, the present invention may be implemented within a computing device, wherein programmatic instructions are stored and loaded into the memory of a data processing system for execution, thereby enabling the aforementioned programmatically executable process to be performed. Similarly, the present invention may be implemented within a data processing system that is configured to load programmatic instructions from a computing device and then to execute the programmatic instructions in order to perform the aforementioned programmatically executable process.

In order to fulfill this function, the computing device is a non-transitory computer-readable storage medium(s) that retains or stores computer-readable program instructions. Upon execution from memory by one or more processing units of a data processing system, these instructions prompt the processing units to undertake disparate programmatic processes pertaining to various aspects of the programmatically executable process. In this sense, the processing units are equipped with an instruction execution device, such as a central processing unit (CPU) of a computer. It is possible that one or more computers may be included in the data processing system. It should be noted that, although the CPU may be a single-core CPU, it is to be understood that multiple CPU cores may operate within the CPU. In either case, instructions are loaded directly from memory into one or more of the cores of one or more CPUs for execution.

In addition to direct loading of the instructions from memory for execution by one or more cores of a CPU or multiple CPUs, the computer-readable program instructions described herein may alternatively be fetched from a computer communications network into the memory of a computer of the data processing system for execution therein. Moreover, only a subset of the program instructions may be retrieved from the computer communications network and stored in the computer's persistent storage, while the remaining instructions may be loaded from other sources. In addition, only a subset of the program instructions may be executed by one or more processing cores of one or more CPUs of one of the computers in the data processing system. The remaining instructions may be executed cooperatively within a different computer in the data processing system that is co-located with the computer or positioned remotely via the computer communications network. This allows for the sharing of the results of the computation between both computers.

The corresponding structures, materials, acts, and equivalents of all stage plus function means or elements of the following claims are intended to include any structure, material, or act for carrying out the function in combination with other claimed elements, as specifically set forth. The present invention has been described for illustrative and descriptive purposes only; it is not intended to be exhaustive or limited to the invention in the form disclosed. It should be noted that numerous modifications and variations will be apparent to those with the requisite expertise without necessitating a departure from the scope and spirit of the invention. The embodiments were selected and described with the intention of elucidating the principles of the invention and its practical application. Furthermore, they were chosen with the objective of enabling those skilled in the art to comprehend the invention in its various embodiments with the appropriate modifications for the intended use.

Note that in this text, the term "comprises" and its derivations (such as "comprising", etc.) should not be understood in an excluding sense, that is, these terms should not be interpreted as excluding the possibility that what is described and defined may include further elements, steps, etc.

Numerical references used in the figures:

    Source server 110
    Encryption server 120
    Source message Mk 5
    Source trust environment 100
    Destination trust environment 200
    Decryption server 230
    Decrypted message Mk 7
    Destination server 240
    Encrypted message Sk 6
    SNDL attack 400
    Untrust environment 300

In the encryption server 120:

- Message receiver 121
- Hash generator 122
- Hash pool 126
- Random hash selector 123
- Historical hash cypher 124
- Hash retriever 125
- Session key based cypher 127
- Hash selection list 128
- Selected hashes 129

In the decryption server 230:

- Session key based decypher 231
- Hash selection list 232
- Historical hash decypher 233

- Hash retriever 234
- Hash generator 235
- Hash pool 236
- Message forwarder 237

In the historical hash cypher 124:

- String concatenation 1241
- Sha-256 1242
- Session key 1243
- AES 1244

## Claims

1. A historical data-based encryption system arranged for the communication of a source message (5) from a source server (110) within a trusted source environment (100) to a destination server (240) within a trusted destination environment (200); wherein the communication withing the trusted environments (100,200) is made throughout an untrust environment (300); the system comprising:

    an encryption server (120) within the trusted source environment (100) arranged for generating an encrypted message (6) from the source message (5) and historical hashes from previous exchanged messages, and
    a decryption server (230) within the trusted destination environment (200) arranged for recovering the encrypted message (6), using the same historical hashes as the encryption server (120), to generate a decrypted message (7) equal to the original message (5).

2. The system according to claim 1 wherein the encryption server (120) comprises:

    a message receiver (121) configured to receive the source message (5) from the source server (110);
    a hash generator (122) configured to generate at least one quantum-resistant hash based on the source message (5);
    a hash pool (126) configured to store previously generated hashes;
    a random hash selector (123) configured to generate a list of random indices to select hashes from the hash pool (126);
    a historical hash cypher (124) configured to concatenate selected hashes, process them with a hash function, and generate a session key to encrypt the source message (5);
    a session key-based cypher (127) configured to generate an encrypted message (6) by encrypting the list of random indices and the encrypted source message (Hk), using a previous exchanged session key between the encryption server (120) and the decryption server (230); and wherein the encrypted message (6) is transmitted to the decryption server (230).

3. The system according to claims 1 or 2 wherein the decryption server (230) comprises:

a session key-based decypher (231) to decrypt the received encrypted message (6) to obtain the list of random indices and the encrypted source message (Hk);
a hash retriever (234) configured to fetch the selected hashes from a hash pool (236), based on the list of random indices;
a historical hash decypher (233) configured to reconstruct the original source message (7) from the encrypted source message (Hk), using the retrieved selected hashes; and
a message forwarder (237) to forward the decrypted message (7) to the destination server (240).

4. The system according to claim 2 wherein the hash generator (122) comprises a quantum-resistant hash function arranged for ensuring data integrity and security, preferably the quantum-resistant hash function is SHA-256.

5. The system according to claim 2, wherein the session key exchange is performed using post-quantum cryptographic algorithms or a combination of post-quantum cryptographic algorithms and non-quantum cryptographic algorithms.

6. The system of claim 5 wherein the post-quantum cryptographic algorithm is a Crystal-Kyber algorithm.

7. A historical data-based encryption method implemented in a system according to any of claims 1 to 7 to introduce traffic spikes to increase the difficulty cost of SNDL attacks (400) in an untrusted environment (300) between two different trusted environment (100,200) by requiring an attacker to intercept more data over time,
the method comprising:

an encryption process executed in an encryption server (120) within the trusted source environment (100) comprising, at least, the generation of an encrypted message (6) from a source message (5) and historical hashes from previous exchanged messages, and
a decryption process executed in a decryption server (230) within the trusted destination environment (200) comprising, at least, the recovering of the encrypted message (6) transmitted by the encryption server (120), using the same historical hashes as the encryption process to generate a decrypted message (7) equal to the original message (5).

8. The method according to claim 7 wherein the encryption process further comprises the steps of:

receiving a source message (5) by a message receiver (121) at an encryption server (120);
generating a quantum-resistant hash of the source message (5) using a hash generator (122) and storing it in a hash pool (126);
generating a list of random indices by a random hash selector (123) to select hashes from the hash pool (126);
concatenating selected hashes using a string concatenation module (1241) in a historical hash cypher (124) and processing them with a hash function (1242) to generate a session key (1243);
encrypting the source message (5) using the session key (1243) and a quantum-resistant algorithm to produce a hashed message (Hk);
encrypting the hashed message (Hk) and the list of random indices using a previous exchanged session key between the encryption server (120) and the decryption server (230), to generate an encrypted message (6); and
transmitting the encrypted message (6) to a decryption server (230).

9. The method according to claim 7 or 8 wherein the decryption process further comprises the steps of:

decrypting the encrypted message (6) at the decryption server (230) to retrieve the hashed message (Hk) and the list of random indices;
fetching the selected hashes from a hash pool (236) at the decryption server (230) using a hash retriever (234);
reconstructing the original source message (5) by decrypting the hashed message (Hk) with the selected hashes using a historical hash decypher (233); and forwarding the decrypted message (7) to a destination server (240) by a message forwarder (237).

10. The method of any of the previous claims 8-9, wherein the hash generator (122) uses a concatenation of previously generated hashes to maintain historical dependencies.

11. The method of any of the previous claims 8-10, wherein the session key exchange is performed using post-quantum cryptographic algorithms or a combination of post-quantum cryptographic algorithms and non-quantum cryptographic algorithms.

**12.** The method according to any of the previous claims wherein a flag is included in the encrypted message (6) to indicate whether the message should be used to update the hash pool (126,236).

**13.** The method according to any of the previous claims, wherein the method comprises the generation of random synthetic traffic spikes between the encryption server (120) and the decryption server (230) to increase the cost of performing a network interception; and wherein in a period of normal traffic (4) the messages are encrypted using hashes derived from messages exchanged during a previous synthetic traffic spike (1).

**14.** A computer program comprising instructions that, when the program is executed by a computer, cause the computer to carry out the method of any of claims 7-13.

**15.** A computer-readable medium comprising instructions that, when executed by a computer, cause the computer to carry out the method of any of claims 7-13.

FIG. 1 (Prior art)

FIG. 2 (Prior art)

FIG. 3

FIG. 4

**FIG. 5**

Encryption Server (120)

Decryption Server (230)

Historical data dependency

Synthetic traffic Spike (1)    Period with low activity

Normal traffic (2)

⋮

Synthetic traffic Spike (3)    Period with low activity

Normal traffic (4)

FIG. 6

**FIG. 7**

Europäisches
Patentamt

European
Patent Office

Office européen
des brevets

# EUROPEAN SEARCH REPORT

**Application Number**

EP 24 38 3347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/059810 A1 (ISHIMOTO KAN [JP]) 6 March 2008 (2008-03-06) | 1,7,12, 14,15 | INV. G06F21/60 |
| Y | * figure 1 * | 13 | H04L9/32 |
| A | * paragraph [0007] * * paragraph [0050] - paragraph [0053] * ----- | 2-6,8-11 | H04L9/00 H04L9/40 |
| Y | US 2021/266344 A1 (SORYAL JOSEPH [US]) 26 August 2021 (2021-08-26) | 13 | |
| A | * figure 2 * * paragraph [0002] * * paragraph [0006] * * paragraph [0025] - paragraph [0028] * ----- | 1-12,14, 15 | |

**TECHNICAL FIELDS SEARCHED (IPC)**

G06F
H04L

The present search report has been drawn up for all claims

| Place of search | Date of completion of the search | Examiner |
|---|---|---|
| Munich | 12 May 2025 | Caragata, Daniel |

EPO FORM 1503 03.82 (P04C01)

## ANNEX TO THE EUROPEAN SEARCH REPORT
## ON EUROPEAN PATENT APPLICATION NO.

EP 24 38 3347

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | Publication date | Patent family member(s) | | Publication date |
|---|---|---|---|---|
| US 2008059810 A1 | 06-03-2008 | JP | 4305481 B2 | 29-07-2009 |
| | | JP | 2008059033 A | 13-03-2008 |
| | | US | 2008059810 A1 | 06-03-2008 |
| US 2021266344 A1 | 26-08-2021 | US | 2021266344 A1 | 26-08-2021 |
| | | US | 2023073668 A1 | 09-03-2023 |
| | | WO | 2021168196 A1 | 26-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10887080 B2

- CN 118590234 A